# EUROPÄISCHE PATENTSCHRIFT

(11) **EP 1 740 638 B1**
(45) Veröffentlichungstag und Bekanntmachung des Hinweises auf die Patenterteilung: **05.03.2008**
(21) Anmeldenummer: 05732143.2
(22) Anmeldetag: 12.04.2005
(51) Int. Cl.: C08G 64/40, C08F 6/10

(54) **VERFAHREN ZUR HERSTELLUNG VON POLYCARBONAT**
METHOD FOR PRODUCING POLYCARBONATE
PROCEDE DE PRODUCTION DE POLYCARBONATE

(30) Priorität: 21.04.2004 DE 102004019294
(43) Veröffentlichungstag der Anmeldung: 10.01.2007
(73) Patentinhaber: Bayer MaterialScience AG, 51368 Leverkusen (DE)
(72) Erfinder: KIRCHHOFF, Jörg, 51061 Köln (DE); KÖNIG, Thomas, 51375 Leverkusen (DE); KOHLGRÜBER, Klemens, 51515 Kürten (DE); KÜHLING, Steffen, 40670 Meerbusch (DE); VAN MEIRVENNE, Dirk, 47800 Krefeld (DE)
(86) Internationale Anmeldenummer: PCT/EP2005/003820
(87) Internationale Veröffentlichungsnummer: WO 2005/103114

(56) Entgegenhaltungen:
- EP-A- 0 768 155
- EP-A- 1 415 693
- WO-A-99/54017

## Beschreibung

Die Erfindung betrifft ein Verfahren zur Isolierung von Polycarbonat, hergestellt nach dem Phasengrenzflächenverfahren, durch Verdampfen und Entgasen einer Lösung von Polycarbonat in einem organischen Lösungsmittel.

Das Verfahren zur Polycarbonatsynthese nach dem Phasengrenzflächenverfahren ist mannigfaltig in der Literatur beschrieben, so unter anderem bei Schnell, "Chemistry and Physics of Polycarbonates", Polymer Reviews, Volume 9, Interscience Publishers, New York, London, Sydney 1964, Seite 33-70.

Bei dem Phasengrenzflächenverfahren erfolgt die Phosgenierung eines in wässrig-alkalischer Lösung (oder Suspension) vorgelegten Dinatriumsalzes eines Bisphenols (oder eines Gemisches verschiedener Bisphenole) in Gegenwart eines inerten organischen Lösungsmittels oder Lösungsmittelgemisches, welches eine zweite Phase ausbildet. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten aufkondensiert. Die organische Phase wird schließlich abgetrennt.

Das Polycarbonat muss anschließend aus der organischen Phase isoliert werden. Die gängigen Verfahren zur Konzentrierung der Polycarbonatlösung und zur Isolierung das Polycarbonats sind in der Patentliteratur und in Lehrbüchern beschrieben und dem Fachmann geläufig. Die Isolierung des Polycarbonats aus der Lösung wird bevorzugt durch Verdampfen des Lösungsmittels mittels Temperatur oder Vakuum durchgeführt. Dieses Verfahren erfordert, um nach dem Verdampfen des Lösemittels direkt die Schmelzephase zu erhalten, den Einsatz eines hoch siedenden (>100°C) Lösemittels, beispielsweise Chlorbenzol. Um die Löslichkeit des Polymers im Lösungsmittel während der Reaktion zu verbessern, wird auch ein Gemisch aus einem oder mehreren hochsiedenden Lösemitteln und dem niedrig siedenden Dichlormethan eingesetzt. Typischerweise ist das Gewichtsverhältnis von Dichlormethan zu dem hochsiedenden Lösemittel etwa 1:1.

Eine weitere Möglichkeit liegt in der Eindüsung eines erhitzten Gases, vor allem Wasserdampf, zum Austreiben der flüchtigen Bestandteile. Dabei wird die Polycarbonatlösung mit dem Trägergas versprüht, und Polycarbonat fällt als Feststoff an, vor allem als wasserfeuchte Suspension. Andere Isolierungsmethoden sind die Kristallisation und Fällung sowie das Ausheizen der Reste des Lösungsmittels in der festen Phase. Letzteres Verfahren erfordert den Einsatz von Dichlormethan als Lösemittel, wobei Restgehalte an Flüchtigen von etwa 2 ppm Dichlormethan erreicht werden können.

Restgehalte an Dichlormethan stören im Polycarbonat besonders, da Dichlormethan beim Verarbeitungsprozess mit Restfeuchte zusammen Salzsäure abspaltet und so zu Verfärbungen des Polycarbonats und zu Korrosion an Werkzeugen führen kann.

Bei den bekannten Verfahren zur Verdampfung, oder auch Flashverdampfung, werden Polycarbonatlösungen wiederholt unter leichtem Überdruck auf Temperaturen oberhalb des Siedepunktes erhitzt und diese überhitzten Lösungen anschließend in einen Behälter mit einem niedrigeren Druck, als dem Dampfdruck in der Lösung entspricht, entspannt. Das Verdampfen oder Flashverdampfen des Lösungsmittels kann mit unterschiedlichen Verfahren, Apparaten und Maschinen, z.B. Ausdampfextrudern, Dünnschichtverdampfem oder Vorrichtungen zur Friktionskompaktierung, durchgeführt werden. Gängige Verfahren für die apparative Eindampfung von Polycarbonatlösungen sind dem Fachmann geläufig. Beispielsweise kann die überhitzte Lösung in ein beheiztes Wendelrohr entspannt werden, welches in einen Abscheider mündet. Es kann dabei von Vorteil sein, das Verfahren mehrstufig auszuführen. Weiterhin sind Verfahren bekannt, in denen eine z.T. mehrstufige Aufkonzentrierung der Lösung in vertikalen Rohrbündelwärmetauschern durchgeführt wird.

Um besonders niedrige Restgehalte zu erzielen, können für die letzte Entgasungsstufe Strangverdampfer eingesetzt werden. Dabei wird die Polymerschmelze in einem Abscheider unter Vakuum und erhöhter Temperatur zu feinen Strängen geformt und so vom Lösemittel befreit. Der Nachteil der Strangverdampfertechnik liegt darin, dass eine effektive Entgasung nur durch stabile, das bedeutet im Apparat nicht abreißende, Stränge gewährleistet ist. Die Stabilität der Stränge wird durch die Viskosität der Polymerlösung beeinflusst. Eine zu niedrige Viskosität kann zu Strangabrissen führen. Das bedeutet eine Einschränkung der Betriebsparameter hinsichtlich Temperatur und Eintrittsgehalt an Restflüchtigen. Neben dem negativen Einfluss auf die Viskosität hat eine zu hohe Eintrittskonzentration an Flüchtigen direkt nachteilige Auswirkungen auf den erzielbaren Entgasungserfolg, da der Stoffaustausch rein durch Diffusion bestimmt ist. Die Oberfläche für den Stoffaustausch ist dagegen durch die Stranggeometrie festgelegt. Die erforderliche große Fläche des Schmelzeverteilers, der zum Erzeugen der Stränge erforderlich ist, erfordert zudem große, teure Apparate.

Aus dem Stand der Technik ist außerdem bekannt, den letzten Entgasungsschritt bei der Aufarbeitung von Polymeren unter Aufschäumen mit oder ohne Schleppmittel auszuführen. Verfahren zur apparativen Entgasung von thermoplastischen Polymeren, die auf dem Prinzip der Schaumentgasung beruhen, finden sich im Stand der Technik. Allerdings weisen diese Verfahren häufig den Nachteil auf, dass entweder sehr große Gasmengen abgesaugt werden müssen oder dass keine ausreichend niedrigen Restgehalte erzielt werden können. Außerdem sind die in der Literatur beschriebenen Verfahren häufig nicht flexibel in Bezug auf Durchsatz, Polymertyp und -viskosität und in Bezug auf die Eintrittskonzentration an flüchtigen Komponenten am Eintritt in die jeweilige Entgasungsstufe.

In EP-A 200 368 wird die Schaumentgasung von Styrolpolymeren in einem zweistufigen Prozess beschrieben. Das Verfahren beruht darauf, dass die Menge an Lösungsmittel in der Polymerlösung ausreichend groß eingestellt wird, um ein Aufschäumen zu initiieren.

In EP-A 914 355 ist das Einmischen eines begrenzt löslichen Trennmittels in eine Polymerlösung und die anschließende Entspannung unter Aufschäumen in einen Abscheider unter niedrigem Druck beschrieben. Das dort beschriebene Verfahren dient zum Abtrennen von leicht flüchtigen Lösungsmitteln mit Hilfe von Schäumungsmitteln. Das leicht flüchtige Trennmittel wird nicht vollständig in Lösung gebracht, sondern dispergiert.

In der DE-A 100 15 862 wird ein mehrstufiges Verfahren zur Entfernung von flüchtigen Bestandteilen aus Polyamiden beschrieben. Vor der letzten Entgasungsstufe werden hierfür Schäumungsmittel, z.B. Stickstoff, Kohlendioxid oder Wasser, mit einem Statikmischer dispergiert und dabei teilweise gelöst. Anschließend wird die Polyamidschmelze in einem senkrechten Rohrbündelwärmetauscher oder in einem Schlaufenverdampfer oder in einer Kombination daraus in einen Entgasungsbehälter unter niedrigem Druck entspannt. Drahtschlaufen, auf denen die Schmelze herunterläuft, sorgen für eine verlängerte Verweilzeit und damit für ein besseres Entgasungsergebnis.

Aufgabe der vorliegenden Erfindung ist es, ein Verfahren zur Isolierung von Polycarbonat, hergestellt nach dem Phasengrenzflächenverfahren, bereitzustellen, bei dem das in einem organischen Lösungsmittel gelöste Polycarbonat gewonnen wird. Mit Hilfe des Verfahrens sollen niedrige Restgehalte von insgesamt weniger als 250 ppm, bevorzugt weniger als 100 ppm und besonders bevorzugt weniger als 25 ppm, bezogen auf die Gesamtmasse, an flüchtigen Komponenten erreicht werden. Unter flüchtigen Komponenten sind Lösemittel, wie Monochlorbenzol und Dichlormethan, die entsprechenden nicht umgesetzten Monomere, z.B. BPA, und deren flüchtige Oligomere wie Di-, Tri- und Tetramere zu verstehen. Insbesondere soll das Verfahren in der Lage sein, in der Reaktion eingesetztes Dichlormethan auf unter 2 ppm zu entfernen und bevorzugt Dichlormethan - freies Produkt mit unter 0,5 ppm Dichlormethan zu liefern.

Das Verfahren soll eine hohe Flexibilität in Bezug auf Durchsatz, Polycarbonattyp und -viskosität und in Bezug auf die Eintrittskonzentration an flüchtigen Komponenten am Eintritt in die jeweilige Entgasungsstufe aufweisen. Flexibilität bedeutet in diesem Zusammenhang, dass auf einer Anlage unter Beibehaltung der Qualität ohne aufwendiges Umrüsten oder Stillstandszeiten die genannten Parameter und Produkteigenschaften veränderbar sind. D.h. weitgehend unabhängig von den Eintrittsbedingungen soll eine gleichbleibende Qualität erreicht werden.

Gegenstand der Erfindung ist ein Verfahren zur Isolierung von Polycarbonat, hergestellt nach dem Phasengrenzflächenverfahren, aus einer Lösung in einem organischen Lösungsmittel, umfassend die folgenden Schritte:
(a) Verdampfen des organischen Lösungsmittels bis zu einem Gehalt an Polycarbonat von 90 bis 99,95 Gew.%,
(b) gegebenenfalls Vermischen der in Schritt (a) erhaltenen Schmelze mit einem Schäumungsmittel,
(c) Entgasen der aus (a) und gegebenenfalls (b) erhaltenen Schmelze durch Einleiten über Eintrittsöffnungen in einen Abscheidebehälter
dadurch gekennzeichnet, dass
bei dem Entgasen gemäß Schritt (c) die Schmelze über die Eintrittsöffnungen in Teilströme von 0,1 bis 20 kg/h aufgeteilt wird und beim Eintritt in die Eintrittsöffnungen eine Übersättigung mit flüchtigen Bestandteilen von mindestens 1 bar sowie eine Temperatur von 250 bis 340°C aufweist, wobei der Druck in dem Abscheidebehälter 0,1 bis 20 mbar beträgt.

Gemäß Schritt (a) des erfindungsgemäßen Verfahrens wird die Lösung von Polycarbonat in einem organischen Lösungsmittel (nachfolgend vereinfacht auch als Polycarbonatlösung bezeichnet) zunächst so weit eingedampft, dass der Gehalt an Polycarbonat 90 bis 99,95 Gew.% beträgt. Die so erhaltene Polycarbonatlösung wird auch synonym als Polycarbonatschmelze bezeichnet. Schritt (a) kann einstufig oder mehrstufig, vorzugsweise mehrstufig, erfolgen.

Gängige Verfahren für die Eindampfung von Polymerlösungen gemäß Schritt (a) sind dem Fachmann geläufig. Beispielsweise kann die überhitzte Lösung in ein beheiztes Wendelrohr entspannt werden, das in einen Abscheider mündet. Ein Beispiel für ein solches Verfahren ist z.B. in DE 1 921 045 A beschrieben. Es kann dabei von Vorteil sein, die Stufen der Aufkonzentrierung, oder anders ausgedrückt die Temperaturstufen der Überhitzung, nicht zu groß werden zu lassen, sondern ein zwei- bis vierstufiges Verfahren zu wählen, wie z.B. in EP 1 094 873 A beschrieben. Weiterhin sind Verfahren bekannt, in denen eine Vorkonzentrierung der Polycarbonatösung in vertikalen Rohrbündelwärmetauschern durchgeführt wird. Solche zum Teil mehrstufigen Verfahren sind z.B. in DE 19 835 744 A beschrieben. Polymerkonzentrationen von 90 bis 99,95 Gew.% oder darüber lassen sich mit solchen Verfahren erreichen. Kombinationen aus Wendelrohren und Rohrbündelwärmetauschern sind ebenfalls denkbar.

Ausgehend von der gemäß Schritt (a) erhaltenen Polycarbonatschmelze wird gegebenenfalls gemäß Schritt (b) durch Zugabe eines Schäumungsmittels und gemäß Schritt (c) in min-destens einem Schaumentgasungsschritt durch Aufteilung der Polycarbonatschmelze in Teilströme sowie Druckerniedrigung ein Polycarbonat mit einem niedrigen Gehalt an flüchtigen Bestandteilen gewonnen. Unter einem niedrigen Gehalt an flüchtigen Bestandteilen wird im Sinne der vorliegenden Erfindung eine Konzentration der flüchtigen Bestandteile von weniger als 250 ppm, bevorzugt von weniger als 100 ppm und besonders bevorzugt von weniger als 25 ppm, jeweils bezogen auf die Gesamtmasse, verstanden.

Die gemäß Schritt (c) zu entfernenden flüchtigen Bestandteile umfassen die Lösungsmittel der Polymerisationsreaktion nach dem Phasengrenzflächenverfahren, insbesondere Monochlorbenzol und Restmengen von Dichlormethan. Der Massenanteil an Monochlorbenzol vor der Schaumentgasung (Schritt (c)), d.h. beim Eintritt in die Eintrittsdüsen des Abscheidebehälters, ist beispielsweise kleiner als 10%. Der Eintrittsgehalt des Dichlormethan, bezogen auf die Masse, ist beispielsweise kleiner als 5%. Dem Fachmann sind weitere mögliche Lösemittel für die Polycarbonatherstellung bekannt, z.B. Ethylbenzol, Toluol oder Xylol, die falls vorhanden, ebenfalls auf niedrige Restgehalte entfernt werden müssen. Daneben befinden sich Reste von Monomeren oder flüchtigen Oligomeren in der Polycarbonatschmelze, deren Anteil ebenfalls mit dem erfindungsgemäßen Verfahren erniedrigt wird.

Um ein Aufschäumen der Polycarbonatschmelze in Schritt (c) zu initiieren und damit eine besonders effektive Entgasung zu erzielen, muss genügend Lösungsmittel in der Polycarbonatschmelze vorhanden sein. Dementsprechend beträgt die Übersättigung der Polycarbonatschmelze mit flüchtigen Bestandteilen beim Eintritt in die Eintrittsöffnungen mindestens 0,1 bar, bevorzugt mindestens 0,5 bar und besonders bevorzugt mindestens 1 bar. Die Übersättigung wird definiert als die Differenz des Dampfdrucks aller flüchtigen Komponenten beim Eintritt in die Eintrittsöffnungen und dem Druck im Abscheidebehälter (nachfolgend auch als Abscheider oder Entgasungsbehälter bezeichnet). Der Dampfdruck setzt sich aus der Summe der Partialdrücke aller in der Polymerschmelze vorhandenen Komponenten zusammen und ist abhängig von der Temperatur und der Konzentration der flüchtigen Bestandteile.

Der Entgasungserfolg ist weitgehend unabhängig davon, ob die Übersättigung nur durch die in der Schmelze vorhandenen Lösungsmittel aufgebracht wird oder ob zusätzlich ein Schäumungsmittel zugegeben wird. Für den Dampfdruck ist die Temperatur und die Konzentration der flüchtigen Komponenten maßgebend. Wird allein durch Reste an Lösungsmittel in der Polycarbonatschmelze der erforderliche Dampfdruck aufgebaut, kann auf den Einsatz von Schäumungsmittel verzichtet werden.

Liegt keine ausreichende Menge an Lösungsmittel in der Polycarbonatschmelze vor, d.h. ist der Dampfdruck des Lösungsmittels allein zu gering, wird ein Schäumungsmittel zugegeben, um den notwendigen Dampfdruck in der Polycarbonatschmelze aufzubauen. Dementsprechend wird in einer Ausführungsform des erfindungsgemäßen Verfahrens vor dem Entgasen gemäß Schritt (c) die aus (a) erhaltene Schmelze mit einem Schäumungsmittel gemäß Schritt (b) vermischt.

Das Schäumungsmittel ist in der Regel eine leicht flüchtige Substanz mit einem hohen Dampfdruck. Das Aufschäumen der Polycarbonatschmelze wird durch den hohen Dampfdruck des Schäumungsmittels initiiert. Der Schaum bewirkt eine starke Oberflächenvergrößerung, die vorteilhaft für die Entgasung ist. Zudem wird eine Erniedrigung des Partialdrucks der im Polymer befindlichen Reste an Lösungsmittel oder anderen flüchtigen Bestandteilen in der Gasphase des Abscheiders bewirkt, wodurch prinzipiell niedrigere Restgehalte an flüchtigen Bestandteilen zu erzielen sind.

Als Schäumungsmittel wird bevorzugt ein inertes Gas oder eine inerte Flüssigkeit oder eine Mischung aus inerten Gasen und/oder Flüssigkeiten als Schäumungsmittel eingesetzt. Beispiele für geeignete Schäumungsmittel sind Stickstoff, Kohlendioxid, Wasser, Methan und Helium. Besonders bevorzugt wird Wasser, Kohlendioxid oder Stickstoff und ganz besonders bevorzugt Stickstoff als Schäumungsmittel eingesetzt.

Im Rahmen der vorliegenden Erfindung wurde außerdem gefunden, dass der Entgasungserfolg wesentlich gesteigert wird, wenn die Schaumentgasung, mit oder ohne die Zugabe eines Schäumungsmittels, mehrfach hintereinander durchgeführt wird. Dabei muss in jeder Entgasungsstufe die notwendige Übersättigung gewährleistet sein. Falls notwendig kann vor jedem Schaumentgasungschritt (c) ein Schäumungsmittel gemäß Schritt (b) zugegeben werden. Bei der Ausführung der Entgasung in mehreren Stufen ist darauf zu achten, dass die Verweilzeit insgesamt klein bleibt, um unerwünschte Verfärbung oder Degradation zu verhindern. Durch eine geeignete Apparatekonfiguration ist eine kurze Verweilzeit zu erreichen. Wird die Schaumentgasung in mehreren Stufen durchgeführt, müssen die einzelnen Stufen nicht zwangsläufig exakt gleich ausgeführt werden. Je nach Anwendungsfall, d.h. je nach Durchsatz, Viskosität des Produktes und Temperatur, können die Stufen in ihrer Ausführung bzgl. Aufteilung der Teilströme, Menge des Schäumungsmittels, Temperatur und Durchmesser der Eintrittsöffnungen unterschiedlich ausgeführt sein.

Das Schäumungsmittel wird in Schritt (b) in der Polycarbonatschmelze verteilt. Zum Verteilen und Lösen des Schäumungsmittels wird bevorzugt ein statischer Mischer eingesetzt. Übliche Ausführungsformen von statischen Mischern für das Mischen von hochviskosen Polycarbonatschmelzen sind aus dem Stand der Technik hinlänglich bekannt. Der statische Mischer hat bevorzugt die Struktur eines SMX-Mischers, der ausführlich beispielsweise in Arno Signer, Statisches Mischen in der Kunststoffverarbeitung und -herstellung, Plastverarbeiter 11(43), 1992 beschrieben ist. Bevorzugt können auch Statikmischer gemäß EP 947 239 A oder US 6 394 644 B verwendet werden. Besonders bevorzugt ist ein SMX-Mischer, dessen freier innerer Durchmesser aufgrund unterschiedlicher Mischelemente entlang des Mischers variiert, wobei ganz besonders bevorzugt sich der freie innere Durchmesser in Strömungsrichtung des durchströmten Mischers z.B. kaskadenförmig oder stufenförmig verringert.

Um das Dispergieren und Lösen des Schäumungsmittels in der Polycarbonatschmelze zu verbessern, kann der Druck im statischen Mischer durch eine geeignete Vorrichtung, beispielsweise ein Druckhalteventil oder eine Drossel, erhöht werden. Dem Fachmann ist bekannt, dass sich mit einer Erhöhung des Drucks eine größere Menge eines flüchtigen Stoffes in einer Schmelze lösen lässt.

Die Beschaffenheit der Polycarbonatschmelze beim Eintritt in die Eintrittsöffnungen gemäß Schritt (c) vor der Entspannung, namentlich das Vorhandensein von ein oder mehreren Phasen, ist für den Entgasungserfolg und die Prozessstabilität entscheidend. Ein besonders guter Entgasungserfolg wird erreicht, wenn vor der Entspannung alle flüchtigen Komponenten, inklusive Schäumungsmittel, vollständig gelöst sind. Vollständig gelöst im Sinne der vorliegenden Erfindung bedeutet, dass die Polycarbonatschmelze mit dem darin enthaltenen Lösemittel und zugesetztem Schäumungsmittel ein einphasiges Gemisch bildet. In der Polycarbonatschmelze befinden sich dann am Eintritt in die Eintrittsöffnungen keine Blasen oder Tröpfchen.

Insbesondere soll das eingemischte Schäumungsmittel komplett gelöst werden. Die Menge des Schäumungsmittels, der Druck und die Temperatur werden dabei so gewählt, dass das Schäumungsmittel vollständig in der Polycarbonatschmelze gelöst wird. Druck und Temperatur, die für das komplette Lösen einer bestimmten Menge Schäumungsmittel notwendig sind, hängen von der Art des Schäumungsmittels ab. Dem Fachmann ist bekannt, dass sich bei gegebener Temperatur einer Polycarbonatschmelze bei Erhöhung des Druckes die maximal lösliche Menge eines Schäumungsmittels erhöht. Gleiches gilt für die anderen in der Polycarbonatschmelze enthaltenen flüchtigen Komponenten.

Das Schäumungsmittel soll so gewählt sein, dass schon geringe Mengen ausreichen, um nach einer Druckentlastung beim Eintritt in die Eintrittsöffnungen ein starkes Aufschäumen der Polycarbonatschmelze zu bewirken. Im Rahmen des erfindungsgemäßen Verfahrens bedeutet eine geringe Menge, dass der Polycarbonatschmelze 0,01 bis 1 Massen-% Schäumungsmittel, bezogen auf die Polymermasse, zugegeben werden, bevorzugt 0,02 bis 0,5 Masse-%, besonders bevorzugt 0,05 bis 0,3 Masse-%. Trotz dieser geringen Menge an Schäumungsmittel erfolgt die Entspannung unter Aufschäumen der Polycarbonatschmelze.

Der Dampfdruck des Schäumungsmittels für die am Eintritt in die Eintrittsöffnungen der Entgasungsstufe (c) herrschende Temperatur bei der eingestellten Konzentration an Schäumungsmittel in der Schmelze beträgt 0,1 bis 100 bar, bevorzugt 0,5 bis 60 bar und besonders bevorzugt 1 bis 40 bar.

Vor, während oder nach dem Einmischen des Schäumungsmittels kann die Polycarbonatschmelze erwärmt oder abgekühlt werden, bevorzugt erwärmt. Eine erhöhte Temperatur bedeutet einen erhöhten Dampfdruck der flüchtigen Komponenten, so dass in der anschließenden Entgasung die Schaumbildung unterstützt wird und die Abtrennung der flüchtigen Bestandteile einfacher gelingt. Dem Fachmann sind geeignete Apparate zum Erwärmen oder Kühlen einer Polymerschmelze, z.B. Rohrbündelwärmeübertrager, Plattenwärmeübertrager oder Wärmeübertrager mit statischen Mischern, bekannt.

Vorzugsweise beträgt die Temperaturänderung in der Schmelze vom Punkt der Schäumungsmittelzugabe bis zum Eintritt in die Eintrittsöffnungen gemäß Schritt (c) nicht mehr als 100°C, bevorzugt nicht mehr als 90°C. Die Temperatur der Polycarbonatschmelze am Eintritt in die Eintrittsöffnungen beträgt vorzugsweise 250°C bis 340°C, besonders bevorzugt 260°C bis 320°C. Eine weitere Erwärmung der Polycarbonatschmelze ist auch nach dem Eintritt in die Eintrittsöffnungen bis zum Eintritt in den Entgasungsbehälter möglich, wenn beispielsweise beheizbare Rohre als Eintrittsöffnungen und Entspannungsorgane eingesetzt werden. Vorzugsweise beträgt die Temperaturdifferenz zwischen dem Eintritt in die Eintrittsöffnungen und dem Eintritt in den Abscheidebehälter nicht mehr als 100°C, besonders bevorzugt nicht mehr als 80°C.

Gemäß Schritt (c) wird die Polycarbonatschmelze über Eintrittsöffnungen in Teilströmen von 0,1 bis 20 kg/h in einen Abscheidebehälter eingeleitet, bevorzugt 0,125 bis 10 kg/h und besonders bevorzugt 0,15 bis 5 kg/h.

Die Polycarbonatschmelze wird in einen Abscheidebehälter mit niedrigem Druck von 0,1 bis 20 mbar, bevorzugt von 0,3 bis 10 mbar, besonders bevorzugt von 0,5 bis 5 mbar, entspannt. Die Temperatur der Polycarbonatschmelze beim Eintritt in den Entgasungsbehälter beträgt erfindungsgemäß 250 bis 360°C, bevorzugt 260 bis 340°C und besonders bevorzugt 270 bis 320°C.

Die Polycarbonatschmelze wird von oben über die Eintrittsöffnungen in den Abscheidebehälter eingeleitet. Dementsprechend befinden sich die Eintrittsöffnungen im oberen Bereich des Abscheidebehälters. Die Eintrittsöffnungen sind insbesondere in einer Ebene angeordnet, können jedoch auch auf unterschiedlichen Ebenen im oberen Bereich des Abscheidebehälters angeordnet sein.

Die Eintrittsöffnungen übernehmen die Funktion von Entspannungsorganen. Wesentliches Auslegungskriterium für diese Entspannungsorgane ist der Druckverlust, der durch sie erzeugt wird. Der Druckverlust ergibt sich aus der Viskosität der Polymerschmelze, abhängig von Produkttyp, Temperatur und der Konzentration an Flüchtigen und Schäumungsmittel, dem Durchsatz und der Geometrie der Entspannungsorgane. Dem Fachmann ist der Zusammenhang zwischen Durchmesser der Bohrung, Massenstrom, Viskosität der Polycarbonatschmelze und Druckverlust bekannt. Bei der Auslegung des Druckverlustes kann der Fachmann von dem Einfluss des Schleppmittels absehen, so dass eine Auslegung nach bekannten Regeln der Technik möglich ist. Der Druckverlust soll so eingestellt werden, dass der Absolutdruck vor dem Eintritt in die Eintrittsöffnungen hoch genug ist, um ein Aufschäumen vor dem Eintritt in die Eintrittsöffnungen zu verhindern. Das Aufschäumen findet erst nach dem Eintritt in die Eintrittsöffnungen statt.

Als Eintrittsöffnungen eignen sich beispielsweise Bohrungen oder Schlitze, im folgenden Düsen genannt, in einer Platte (auch als Düsenplatte bezeichnet). Düsen werden bevorzugt als Bohrungen in einer Düsenplatte ausgeführt. Die Platte kann prinzipiell von beliebiger Dicke sein.

In einer bevorzugten Ausführung des erfindungsgemäßen Verfahrens werden die Teilströme der Polycarbonatschmelze jeweils durch Düsen in einer horizontal angeordneten Platte geführt. Die Bohrungen münden direkt in den Abscheidebehälter, in dem ein niedriger Druck herrscht. Bevorzugte Durchmesser der Düsen sind 0,8 bis 5 mm, besonders bevorzugt 1 bis 4 mm.

Auch Rohre können als Eintrittsöffnungen eingesetzt werden. Bevorzugt sind die Rohre vertikal angeordnet und von oben nach unten mit Polycarbonatschmelze durchströmt. Bevorzugte Rohrdurchmesser sind 4 bis 20 mm, besonders bevorzugt 5 bis 15 mm.

In einer weiteren bevorzugten Ausführung des erfindungsgemäßen Verfahrens werden die Rohre in der Funktion eines Wärmeübertragers bzw. Wärmetauschers eingesetzt. Hierfür werden sie insbesondere als paralleles Bündel ausgeführt und von einem Wärmeübertragungsmedium, bevorzugt ein flüssiges Wärmeübertragungsöl oder kondensierender Wasser- oder Wärmeübertragungsöldampf, umgeben. Die Länge der Rohre beträgt bevorzugt 300 bis 2500 mm, besonders bevorzugt 500 bis 2000 mm.

Die Rohre des Rohrbündelwärmeübertragers münden also direkt in den Abscheidebehälter. Die einzelnen Rohre werden so ausgeführt, dass die Polycarbonatschmelze am Eintritt in den Rohrbündelwärmeübertrager noch nicht schäumt. Die Rohre können durch Düsen verengt werden, um einen vorgegebenen Druckverlust einzuhalten. Der Druckverlust in einem einzelnen Rohr ist dabei abhängig von der Beschaffenheit des Polycarbonats, der Temperatur am Ein- und am Austritt des Rohres, dem Durchsatz und dem Anteil an Flüchtigen jeweils am Ein- und am Austritt des Rohres. Erst an der Austrittsseite der Rohre zum Abscheider hin, d.h. an den Eintrittsöffnungen des Abscheidebehälters, entsteht der Polymerschaum. Die Durchmesser der Rohre betragen hierbei bevorzugt 4 bis 20 mm, besonders bevorzugt 5 bis 15 mm. Düsen, die zur Erhöhung des Druckverlustes eingesetzt werden, haben Durchmesser von 0,8 bis 5mm, bevorzugt von 1 bis 4mm. Der Massenstrom pro Rohr beträgt 0,1 bis 20 kg/h.

Die Ausführung des erfindungsgemäßen Verfahrens mit einem Rohrbündelwärmetauscher bietet eine bevorzugte Methode zur Heizung oder Kühlung der Polymerschmelze, wie weiter oben dargestellt ist.

Die Abstände der Eintrittsöffnungen voneinander, gemessen von Mittelpunkt zu Mittelpunkt, und damit die Abstände der Teilströme beim Eintritt in den Abscheidebehälter, betragen 5 bis 50 mm, bevorzugt 10 bis 40 mm und besonders bevorzugt 15 bis 25 mm.

Die Verweilzeit der Polycarbonatschmelze in dem Abscheidebehälter muss einerseits ausreichend groß sein, um eine ausreichende Entgasung zu ermöglichen. Sie darf andererseits jedoch nicht zu groß sein, um die Produktqualität des Polycarbonats nicht zu beeinträchtigen. Die Verweilzeit der Polycarbonatschmelze in dem Abscheidebehälter in Schritt (c) beträgt bevorzugt maximal 10 Minuten, besonders bevorzugt maximal 5 Minuten.

In einer weiteren Ausführungsform des erfindungsgemäßen Verfahrens kann die Verweilzeit durch Leitelemente beeinflusst werden. Die Leitelemente haben die Funktion, die Verweilzeit zu verlängern und gleichzeitig die Oberfläche der Polycarbonatschmelze zu vergrößern.

Die Leitelemente können z.B. aus Lochblechen, profilierten Blechen, Drähten, Drahtgeflechten, Gliederketten, schmalen Metallstreifen mit beliebigen Querschnitten u.ä. bestehen, wobei sie bevorzugt im Wesentlichen horizontal angeordnet sind. Beispiele für solche Leitelemente werden z.B. in DE-A 10 144 233 oder in EP-A 1 095 960 beschrieben. Besonders bevorzugt sind die Leitelemente als Drähte ausgeführt, welche in dem Abscheidebehälter im Wesentlichen horizontal angeordnet sind. Die Entgasung der Polycarbonatschmelze ist dadurch stark verbessert, ohne dass eine schädliche Rückspaltung des Polycarbonats auftritt.

Die Drähte können nahezu beliebig angeordnet sein, solange sich die Drähte nicht berühren und im Wesentlichen horizontal angeordnet sind. Im Wesentlichen horizontal bedeutet im Sinne der vorliegenden Erfindung eine maximale Abweichung von der Horizontalen um 20°. Insbesondere sollen zwei oder mehrere Drähte einander nicht berühren, beispielsweise durch Überkreuzen. Es können z.B. mehrere Drähte in mehreren Ebenen vorgesehen sein, wobei sich weder die Drähte einer Ebene noch die Drähte verschiedener Ebenen einander berühren. Sind mehrere Drähte in einer Ebene vorgesehen, können diese im Wesentlichen parallel zueinander angeordnet sein. Die Drähte einer Ebene sollen insbesondere einen Winkel von maximal 20° aufweisen. Sind darüber hinaus mehrere Ebenen von Drähten vorgesehen, können die Drähte verschiedener Ebenen in einem beliebigen Winkel zueinander stehen. Bevorzugt bilden die Drähte verschiedener Ebenen einen Winkel von maximal 180°, besonders bevorzugt von 30 bis 150°, ganz besonders bevorzugt von 70 bis 110°. Werden die einzelnen Drähte einer Ebene nicht parallel gespannt, so wird der Verdrehwinkel der Drähte verschiedener Ebenen anhand der Winkelhalbierenden festgelegt.

Bevorzugt sind Drähte mit einem Durchmesser von 1 mm bis 5 mm, besonders bevorzugt 2 mm bis 4 mm.

Der Vorteil von im Wesentlichen horizontal angeordneten Drähten, die bevorzugt zwischen gegenüberliegenden Wänden des Abscheidebehälters gespannt sind, liegt darin, dass mit einer minimalen Kontaktfläche zwischen Metallwerkstoff des Drahtes und Polycarbonatschmelze eine effektive Oberflächenerneuerung und damit ein guter Stoffaustausch zwischen Gasraum und Polycarbonatschmelze stattfinden kann. Auf senkrecht angeordneten Drähten kann sich in ungünstigen Fällen ein großer Holdup aus hochviskoser Polycarbonatschmelze bilden, d.h. die Polycarbonatschmelze staut sich an den Drähten an. Dies führt zu ungünstigen Verweilzeitverteilungen oder zur Polymerdegradation. Beides kann für die Qualität des Produktes schädlich sein. Auch hat sich in den Experimenten gezeigt, dass ein Netz, Geflecht, Gewirke o.dgl. aus Drähten, wie z.B. in EP-A 1 095 960 beschrieben, an den Knotenpunkten der Drähte zu einem großen Holdup von Polycarbonatschmelze und zu Polymerdegradation neigt. Horizontal gespannte Drähte bewirken zudem eine gute Zerteilung der Schaumstränge und damit eine effektiv vergrößerte Oberfläche für den Stoffaustausch gegenüber Blechen o.ä.

Eine höhere Viskosität der Polycarbonatschmelze führt bei ansonsten gleichen Leitelementen zu einem größeren Holdup, zu größeren Schichtdicken und längeren Verweilzeiten.

Die Polycarbonatschmelze fällt in dem Abscheidebehälter nach unten in einen Sumpf und wird dort von einem geeigneten Austragsorgan, beispielsweise einer Zahnradpumpe oder einem Austragsextruder, abgezogen. Bevorzugt erfolgt der Austrag mit einer Zahnradpumpe. Der Boden des Abscheidebehälters ist bevorzugt konisch mit der Spitze nach unten ausgeführt. Der Winkel des Konus gegen die Horizontale beträgt bevorzugt 20 bis 60°, besonders bevorzugt 30 bis 45°. Bei sehr großen Durchsätzen (beispielsweise größer als 12 Tonnen pro Stunde) kann auch eine Ausführung gewählt werden, bei der der Boden des Abscheidebehälters aus mehreren Konen besteht, welche jeweils an ihrem tiefsten Punkt ein Austragsorgan aufweisen.

Die in Schritt (c) abgetrennten Flüchtigen können von dem gegebenenfalls vorhandenen Schäumungsmittel befreit und einer Aufarbeitung zugeführt werden. Hierbei können die abgetrennten Flüchtigen, die zu einem erheblichen Anteil aus den in dem Verfahren eingesetzten Lösemitteln bestehen, in den Prozess zur Herstellung des Polycarbonates zurückgeführt werden.

Vorteilhafterweise werden die abgetrennten flüchtigen Komponenten nicht wieder in den Prozess zur Herstellung von Polycarbonat zurückgeführt, wenn in dem Verfahren gemäß Schritt (c) nur geringe Mengen Flüchtige von der Polycarbonatschmelze abgetrennt werden, beispielsweise 0,1% bis 0,5%. Der Aufwand für die Aufarbeitung der Flüchtigen muss gegenüber dem wirtschaftlichen Nutzen der Wiederverwendung abgewogen werden. Außerdem kann die Qualität des entstehenden Polycarbonats, beispielsweise hinsichtlich der Farbe, beeinträchtigt werden, wenn durch die aufgearbeiteten Lösemittel Verunreinigungen in den Prozess getragen werden. Eine Aufarbeitung und Rückführung der in dem Verfahren gemäß Schritt (c) abgetrennten Monomere und Oligomere ist aufgrund ihrer sehr geringen Menge nicht wirtschaftlich und kann außerdem zu Qualitätseinbußen bezüglicher der Farbe führen.

Eine Rückführung und Aufarbeitung des Schäumungsmittels ist aufgrund der eingesetzten geringen Mengen in der Regel nicht wirtschaftlich.

Die nach dem erfindungsgemäßen Verfahren erhältlichen thermoplastischen Polycarbonate sind ebenfalls Gegenstand der vorliegenden Erfindung. Diese haben einen Restgehalt an flüchtigen Substanzen (insbesondere Monochlorbenzol) von maximal 500 ppm, bevorzugt maximal 100 ppm und besonders bevorzugt maximal 25 ppm, bezogen auf die Polymermasse. Der Restgehalt an Dichlormethan beträgt maximal 5 ppm, bevorzugt maximal 2 ppm und besonders bevorzugt kleiner als 0,5 ppm (frei von Dichlormethan).

Für das erfindungsgemäße Verfahren geeignete Diphenole zur Herstellung von Polycarbonat sind im Stand der Technik vielfach beschrieben.

Geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1 - Bis-(4-hydroxyphenyl)-cyclohexan und 1,1-Bis-(4-hydroxyphenyl)-3,3,5-trimethylcyclohexan (Bisphenol TMC).

Im Falle der Homopolycarbonate wird nur ein Diphenol eingesetzt, im Falle der Copolycarbonate werden mehrere Diphenole eingesetzt, wobei selbstverständlich die verwendeten Diphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Die zur Regelung des Molekulargewichtes benötigten monofunktionellen Kettenabbrecher, wie Phenol oder Alkylphenole, insbesondere Phenol, p-tert. Butylphenol, iso-Octylphenol, Cumylphenol, deren Chlorkohlensäureester oder Säurechloride von Monocarbonsäuren bzw. Gemischen aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw. im Falle der Säurechloride und Chlorkohlensäureester als Kettenabbrecher solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wo kein Phosgen mehr vorliegt, aber der Katalysator noch nicht dosiert wurde. Alternativ können sie auch vor dem Katalysator, mit dem Katalysator zusammen oder parallel zudosiert werden.

In der gleichen Weise werden ggf. Verzweiger oder Verzweigermischungen der Synthese zugesetzt. Üblicherweise werden Verzweiger jedoch vor den Kettenabbrechern zugesetzt. In der Regel werden Trisphenole, Quarterphenole oder Säurechloride von Tri- oder Tetracarbonsäuren oder Gemische der Polyphenole oder der Säurechloride verwendet. Einige der als Verzweiger geeignete Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die in der Phasengrenzflächensynthese von Polycarbonat verwendeten Katalysatoren sind tert. Amine, insbesondere Triethylamin, Tributylamin, Trioctylamin, N-Ethylpiperidin, N-Methylpiperidin, N-i/n-Propylpiperidin, quartäre Ammoniumsalze wie Tetrabutylammonium-, Tributylbenzylammonium-, Tetraethylammonium-hydroxid, -chlorid, -bromid, -hydrogensulfat, - tetrafluoroborat, sowie die den Ammoniumverbindungen entsprechenden Phosphoniumverbindungen. Diese Verbindungen sind als typische Phasengrenzflächenkatalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es werden eine Oniumverbindung oder ein Gemisch aus Oniumverbindungen als Katalysatoren verwendet. In diesem Fall ist eine Zugabe vor der Phosgendosierung bevorzugt. Die Dosierung des Katalysators oder der Katalysatoren kann in Substanz, in einem inerten Lösungsmittel, vorzugsweise dem Lösungsmittel der Polycarbonatsynthese oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt bei 0,001 bis 10 Mol % bezogen auf Mole eingesetzte Bisphenole, bevorzugt 0,01 bis 8 Mol %, besonders bevorzugt 0,05 bis 5 Mol %.

Die Durchführung der Polycarbonatsynthese kann kontinuierlich oder diskontinuierlich geschehen. Die Reaktion kann daher in Rührkesseln, Rohrreaktoren, Umpumpreaktoren oder Rührkesselkaskaden oder Kombinationen daraus erfolgen. Dabei ist durch Verwendung der bereits erwähnten Mischorgane sicherzustellen, dass wässrige und organische Phase sich möglichst erst dann entmischen, wenn das Synthesegemisch ausreagiert hat, d.h. kein verseifbares Chlor von Phosgen oder Chlorkohlensäureestern mehr enthält.

Nach Eintrag des Phosgens kann es vorteilhaft sein, eine gewisse Zeit die organische Phase und die wässrige Phase zu durchmischen, bevor gegebenenfalls Verzweiger, sofern dieser nicht gemeinsam mit dem Bisphenolat dosiert wird, Kettenabbrecher und Katalysator zugegeben werden. Eine derartige Nachreaktionszeit kann nach jeder Dosierung von Vorteil sein. Diese Nachrührzeiten liegen bei 10 Sekunden bis 60 Minuten, bevorzugt 30 Sekunden bis 40 Minuten, besonders bevorzugt 1 bis 15 Minuten.

Die organische Phase kann aus einem oder Mischungen mehrerer Lösungsmittel bestehen. Geeignete Lösungsmittel sind chlorierte Kohlenwasserstoffe (aliphatische und/oder aromatische), bevorzugt Dichlormethan, Trichlorethylen, 1,1,1-Trichlorethan, 1,1,2- Trichlorethan und Chlorbenzol und deren Gemische. Es können jedoch auch aromatische Kohlenwasserstoffe wie Benzol, Toluol, m/p/o-Xylol oder aromatische Ether wie Anisol allein, im Gemisch mit oder zusätzlich zu chlorierten Kohlenwasserstoffen verwendet werden. Eine andere Ausführungsform der Synthese verwendet Lösungsmittel, welche Polycarbonat nicht lösen sondern nur anquellen. Es können daher auch Nichtlösungsmittel für Polycarbonat in Kombination mit Lösungsmitteln verwendet werden. Dabei können als Lösungsmittel auch in der wässrigen Phase lösliche Lösungsmittel wie Tetrahydrofuran, 1,3/1,4-Dioxan oder 1,3-Dioxolan verwendet werden, wenn der Lösungsmittelpartner die zweite organische Phase bildet.

Das ausreagierte, höchstens noch Spuren (<2 ppm) an Chlorkohlensäureestern enthaltende mindestens zweiphasige Reaktionsgemisch lässt man zur Phasentrennung absitzen. Die wässrige alkalische Phase wird evtl. ganz oder teilweise zurück in die Polycarbonatsynthese als wässrige Phase geleitet oder aber der Abwasseraufarbeitung zugeführt, wo Lösungsmittel- und Katalysatoranteile abgetrennt und rückgeführt werden. In einer anderen Variante der Aufarbeitung wird nach Abtrennung der organischen Verunreinigungen, insbesondere von Lösungsmitteln und Polymerresten, und gegebenenfalls nach der Einstellung eines bestimmten pH-Wertes, z.B. durch Natronlaugezugabe, das Salz abgetrennt, welches z.B. der Chloralkalielektrolyse zugeführt werden kann, während die wässrige Phase gegebenenfalls wieder der Synthese zugeführt wird.

Die organische, das Polycarbonat enthaltende Phase muss nun von allen Kontaminationen alkalischer, ionischer oder katalytischer Art gereinigt werden. Die organische Phase enthält auch nach einem oder mehreren Absetzvorgängen noch Anteile der wässrigen alkalischen Phase in feinen Tröpfchen sowie den Katalysator, in der Regel ein tert. Amin. Die Absetzvorgänge können gegebenenfalls dadurch unterstützt werden, dass die organische Phase Absetzkessel, Rührkessel, Coalescer oder Separatoren bzw. Kombinationen daraus durchläuft, wobei gegebenenfalls Wasser in jedem oder einigen Trennschritten unter Umständen unter Verwendung von aktiven oder passiven Mischorganen zudosiert werden kann.

Nach dieser groben Abtrennung der alkalischen, wässrigen Phase wird die organische Phase ein oder mehrmals mit verdünnten Säuren, Mineral-, Carbon- Hydroxycarbon-und/oder Sulfonsäuren gewaschen. Bevorzugt sind wässrige Mineralsäuren insbesondere Salzsäure, phosphorige Säure und Phosphorsäure oder Mischungen dieser Säuren. Die Konzentration dieser Säuren sollte im Bereich 0,001 bis 50 Gew. %, bevorzugt 0,01 bis 5 Gew. % liegen.

Weiterhin wird die organische Phase mit entsalztem oder destilliertem Wasser wiederholt gewaschen. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen daraus, wobei das Waschwasser zwischen den Waschschritten gegebenenfalls unter Verwendung von aktiven oder passiven Mischorganen zudosiert werden kann.

Zwischen diesen Waschschritten oder auch nach der Wäsche können ggf. Säuren, vorzugsweise gelöst im Lösungsmittel, welches der Polymerlösung zugrunde liegt, zugegeben werden. Bevorzugt werden hier Chlorwasserstoffgas und Phosphorsäure oder phosphorige Säure verwendet, die ggf. auch als Mischungen eingesetzt werden können.

Die nach dem erfindungsgemäßen Verfahren erhaltenen Polycarbonate können zur Veränderung von Eigenschaften mit den üblichen Additiven und Zusatzstoffen (z.B. Hilfs- und Verstärkungsstoffe) versehen werden. Der Zusatz von Additiven und Zuschlagsstoffen dient der Verlängerung der Nutzungsdauer (z.B. Hydrolyse- oder Abbaustabilisatoren), der Verbesserung der Farbstabilität (z.B. Thermo- und UV-Stabilisatoren), der Vereinfachung der Verarbeitung (z.B. Entformer, Fließhilfsmittel), der Verbesserung der Gebrauchseigenschaften (z.B. Antistatika), der Verbesserung des Flammschutzes, der Beeinflussung des optischen Eindrucks (z.B. organische Farbmittel, Pigmente) oder der Anpassung der Polymereigenschaften an bestimmte Belastungen (Schlagzähmodifikatoren, fein zerteilte Mineralien, Faserstoffe, Quarzmehl, Glas- und Kohlenstofffasern).

Die Erfindung wird nachfolgend anhand der beigefügten Zeichnungen näher erläutert. Es zeigen
- Figur 1: ein Schema einer ersten Ausführungsform des Abscheidebehälters zur Durchführung des erfindungsgemäßen Verfahrens
- Figur 2: ein Schema einer zweiten Ausführungsform des Abscheidebehälters.

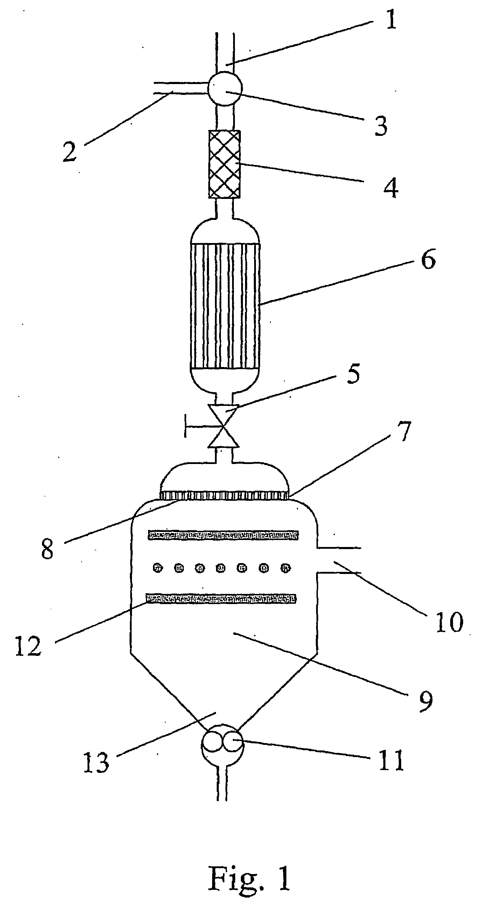

In Figur 1 ist ein Abscheidebehälter 9 dargestellt, welcher in seinem oberen Bereich eine horizontal angeordnete Platte 7 mit Eintrittsöffnungen 8 aufweist. Der Abscheidebehälter 9 besitzt einen Auslass 10 für die flüchtigen Bestandteile sowie einen nach unten gerichteten konischen Auslass 13 im unteren Bereich, welcher mit einer Austragsvorrichtung 11 versehen ist. Im Inneren des Abscheidebehälters 9 sind Leitelemente in Form von Drähten 12 vorgesehen. Die Drähte 12 sind im Wesentlichen horizontal angeordnet, wobei jeweils mehrere Drähte 12 eine Ebene bilden. Die Drähte einer Ebene sind im Wesentlichen parallel zueinander angeordnet. Mehrere Ebenen solcher parallel angeordneter Drähte 12 sind vorgesehen (3 Ebenen in Fig.1), wobei die Drähte zweier übereinander angeordneter Ebenen in einem im Wesentlichen rechten Winkel zueinander stehen.

Über eine Zuführleitung 1 wird die Polycarbonatschmelze dem Abscheidebehälter 9 zugeführt. Mit Hilfe einer Zuführleitung 2 wird über eine Dosiervorrichtung 3 Schäumungsmittel in die Polycarbonatschmelze eingemischt. Das Polycarbonat-Schäumungsmittel-Gemisch wird zunächst durch einen statischen Mischer 4, dann durch einen Wärmetauscher 6 geleitet. Über ein Druckhalteventil 5 strömt die Polycarbonatschmelze auf die Platte 7 mit den Eintrittsöffnungen 8. Dabei wird die Schmelze in Teilströme aufgeteilt. Die Teilströme der Polycarbonatschmelze treten über die Eintrittsöffnungen 8 in den Abscheidebehälter 9 ein. Am Boden 13 des Abscheidebehälters 9 wird die entgaste Polycarbonatschmelze über die Austragsvorrichtung 11 abgezogen.

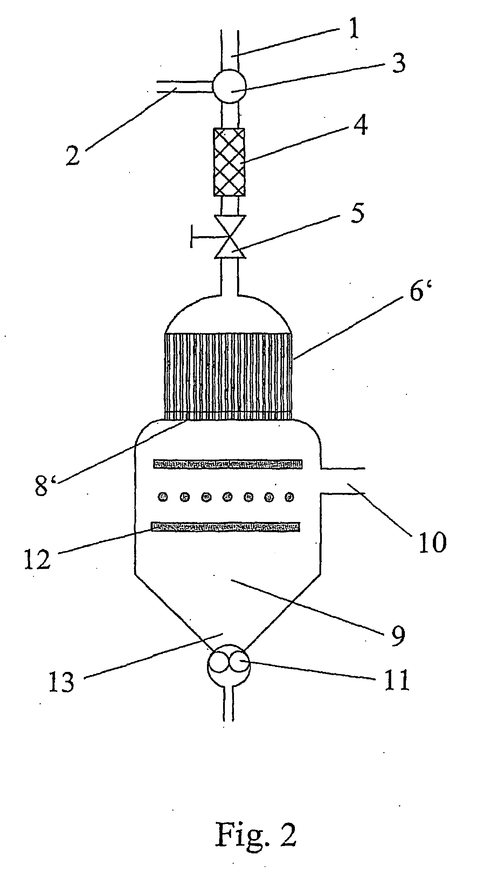

Figur 2 zeigt im Unterschied zu der in Figur 1 dargestellten Ausführungsform im oberen Bereich des Abscheidebehälters 9 einen vertikal angeordneten Wärmetauscher 6' in Form eines Rohrbündelwärmetauschers. Die nach unten gerichteten Rohre stellen die Eintrittsöffnungen 8' dar.

Gemäß Figur 2 wird über eine Zuführleitung 1 die Polycarbonatschmelze dem Abscheidebehälter 9 zugeführt. Mit Hilfe einer Zuführleitung 2 wird über eine Dosiervorrichtung 3 Schäumungsmittel in die Polycarbonatschmelze eingemischt. Das Polycarbonat-Schäumungsmittel-Gemisch wird zunächst durch einen statischen Mischer 4 geleitet. Über ein Druckhalteventil 5 strömt die Polycarbonatschmelze dann in die Eintrittsöffnungen 8' eines Rohrbündelwärmetauschers 6', wodurch die Polycarbonatschmelze in mehrere Teilströme aufgeteilt wird. Die Eintrittsöffnungen 8' münden in den Abscheidebehälter 9. Am Boden 13 des Abscheidebehälters 9 wird die entgaste Polycarbonatschmelze über die Austragsvorrichtung 11 abgezogen.

### Beispiele

Die nachfolgend beschriebenen Versuche wurden an Polycarbonaten durchgeführt, die auf Basis von Bisphenol A im Phasengrenzflächenverfahren hergestellt wurden. Die zu entfernende flüchtige Komponente war in allen Versuchen Monochlorbenzol, in einem Versuch zusätzlich Dichlormethan. Die Ergebnisse der Versuche sind in Tabelle 1 zusammengefasst.

Die Eintrittskonzentrationen der Lösemittel vor dem Schaumentgasungsschritt und gegebenenfalls vor dem Einmischen eines Schäumungsmittels sind in Tabelle 1 angegeben. Als Schäumungsmittel wurde in allen Versuchen, in denen überhaupt ein Schäumungsmittel eingesetzt wurde, Stickstoff eingesetzt. Die Dispergierung des Schäumungsmittels erfolgte in einem statischen Mischer vom Typ SMX.

Der Zustand der Schmelze ist ebenfalls in der Tabelle angegeben: "einphasig" bedeutet, dass alle flüchtigen Komponenten inkl. Schäumungsmittel in der Schmelze vollständig gelöst waren; "zweiphasig" bedeutet, dass beim Eintritt in die Eintrittsöffnungen ein zweiphasiges Gemisch vorlag und bereits Blasen oder Tröpfchen in der Schmelze vorhanden waren. Über ein Druckhalteventil konnte der Druck im statischen Mischer erhöht werden.

Der Druck vor der Eintrittsöffnung ist angegeben, ebenso der abgeschätzte Dampfdruck in der Schmelze beim Eintritt in die Eintrittsöffnung, wobei die Abschätzung über die Temperatur und Konzentration an Flüchtigen beim Eintritt in die Eintrittsöffnung erfolgte. Daraus ist die Übersättigung als Differenz zwischen Dampfdruck und Druck im Abscheider abzulesen.

Die relative Viskosität wird als Verhältnis aus der Viskosität einer Polymerlösung und der Viskosität des reinen Lösungsmittels bestimmt. Sie wird generell in Dichlormethan bei einer Konzentration von 5 g Polymer auf ein Liter Lösungsmittel bei 25 °C ermittelt.

Es ist jeweils die Temperatur nach dem Statikmischer, also nach dem Einmischen des Schäumungsmittels, vor dem Eintritt in die Eintritttsöffnung und beim Eintritt in den Abscheider angegeben. Daraus ist abzuleiten, ob zwischen den einzelnen Verfahrensschritten eine Aufheizung stattgefunden hat.

Der angegebene Durchsatz bezieht sich auf den Durchsatz pro Eintrittsöffnung. Die Eintrittsöffnungen sind über Durchmesser und Länge charakterisiert.

Die Einbauten, oder Leitelemente, bestanden aus horizontal angeordneten Drähten, die unterhalb der Eintrittsöffnung im Abscheider im vertikalen Abstand von 10 cm untereinander gespannt waren. Die Zahl in der Tabelle gibt die Anzahl der horizontal untereinander gespannten Drähte an.

Jeweils zwei untereinander angeordnete Drähte waren gegeneinander um 90° in der Horizontalen gedreht. Der Durchmesser der Drähte betrug 4mm.

In den Versuchen 1-3, 5-13 und 16 wurden beheizbare Rohre als Eintrittsöffnungen verwendet. In den Beispielen wurde die Schmelze in diesen Rohren vor dem Eintritt in den Abscheider gegenüber der Temperatur am Eintritt in die Eintrittsöffnung aufgewärmt.

Versuch 4 wurde mit einer Düse am Ende eines beheizbaren Rohres durchgeführt. Die Schmelze wurde in diesem Fall zwischen der Einmischung des Schäumungsmittels und der Eintrittsöffnung aufgewärmt. In der Eintrittsöffnung, also in der Düse selbst, wurde in Beispiel 4 nicht mehr weiter erwärmt.

Versuche 14 u. 15 wurden ebenfalls mit beheizten Rohren als Eintrittsöffnungen durchgeführt, allerdings waren in diesem Fall die Durchmesser deutlich kleiner (4mm) um einen höheren Druckverlust zu erzeugen und damit die Schmelze vor der Eintrittsöffnung einphasig zu halten.

Versuche 17 u. 18 sind mit einer Düsenplatte durchgeführt worden, eine Aufwärmung der Schmelze nach dem Einmischen des Schäumungsmittels erfolgte nicht mehr.

Die Übersättigung entspricht in allen Beispielen nahezu dem Druck an der Eintrittsöffnung, da der Druck im Abscheider in allen Versuchen 1 mbar beträgt.

Der Einfluss der Übersättigung auf die Entgasung wird anhand der Versuche 1 und 2 deutlich. In Versuch 1 ist aufgrund der MCB-Konzentration von 1% die Übersättigung mit 0,8 bar zu niedrig, um eine effektive Schaumentgasung zu bewirken. 5% MCB Eintrittskonzentration wie in Versuch 2 reichen dagegen aus, um die Schmelze zum Aufschäumen zu bringen. Die Schmelze ist in beiden Fällen vor der Eintrittsöffnung noch einphasig. In Versuch 3 wird gegenüber Versuch 1 zusätzlich 0,2% Stickstoff als Schäumungsmittel zugegeben. Dadurch steigt die Übersättigung weiter an, der Dampfdruck wird allerdings so groß, dass die Schmelze nicht mehr einphasig vorliegt. Im Vergleich zu Vers. 2 gelingt die Entgasung in Versuch 3 daher schlechter. In Versuch 4 wurde durch eine veränderte Geometrie der Eintrittsöffnung der Druck vor der Eintrittsöffnung soweit erhöht, dass wieder eine einphasige Strömung vor der Eintrittsöffnung vorliegt. Die Entgasung gelingt im Vergleich zu Versuch 3 wieder besser.

Die Versuche 5-7 wurden mit einer sehr geringen MCB Eintrittskonzentration von 0,1% durchgeführt. Die Übersättigung ohne Schäumungsmittel beträgt nur 0,1 bar. Erst durch die Zugabe von Schäumungsmittel wird die Übersättigung erhöht, die Schmelze schäumt auf und die Entgasung gelingt bis auf einen Restgehalt an 17 ppm MCB. Durch Einbauten, wie in Versuch 7 gezeigt, wird der Entgasungserfolg noch leicht verbessert.

Die Versuche 8-10 zeigen dieselben Effekte wie bereits für die Versuche 5-6 diskutiert, allerdings mit einer Eingangskonzentration MCB von 0,5%. Das Schäumungsmittel bewirkt Aufschäumen und damit effektive Entgasung, Einbauten verbessern das Ergebnis leicht.

In den Versuchen 5-10 war die Strömung am Eintritt in die Entgasungsöffnungen einphasig, der Druckverlust in der Eintrittsöffnung war dazu groß genug.

Die Versuche 11-13 verdeutlichen den Effekt der Einphasigkeit auf das Entgasungsergebnis. In Versuch 12 wurden 0,1% Schäumungsmittel zugegeben. Die Schmelze war noch einphasig vor der Eintrittsöffnung. In Versuch 13 wurde die Schäumungsmittelmenge auf 0,5% erhöht, wodurch der Dampfdruck so stark anstieg, dass die Schmelze vor der Eintrittsöffnung zweiphasig wurde. Der Restgehalt ist in Versuch 13 dementsprechend gegenüber Versuch 12 leicht erhöht. Allerdings ist die Entgasung mit Schäumungsmittel in Versuch 12 und 13 noch deutlich effektiver als ohne Schäumungsmittel unter ansonsten gleichen Bedingungen, wie in Versuch 11 gezeigt. Die Versuche 11-13 wurden mit 4 horizontalen Drähten als Einbau durchgeführt.

Die Versuche 14 und 15 wurden mit einem beheizbaren Rohr von 4 mm Durchmesser durchgeführt. Wie in der Tabelle angegeben, ist der Druck vor der Eintrittsöffnung, also vor dem Rohr, dadurch deutlich höher als im Fall der Rohre mit 10mm Durchmesser, trotz relativ hoher Temperatur und geringerem Durchsatz von nur 2kg/h. Die Entgasung mit Schäumungsmitteln ist in Versuch 15 sehr effektiv, die Schmelze ist aufgrund des hohen Drucks vor der Eintrittsöffnung in jedem Fall einphasig.

Versuch 16 ist ein Beispiel dafür, dass mit der Schaumentgasung auch Dichlormethan (DCM) auf extrem niedrige Restgehalte entfernt werden kann. Der DCM-Restgehalt beträgt weniger als 2 ppm.

Die Versuche 17 und 18 wurden mit einer Düsenplatte ohne zwischenzeitliche Erwärmung der Schmelze durchgeführt. Der Durchsatz pro Bohrung betrug 0,15 kg/h. Durch den Einsatz von Schäumungsmitteln kann auch mit dem Einsatz einer Düsenplatte eine effektive Entfernung von Flüchtigen durchgeführt werden.

Die Versuche zeigen, dass durch die Schaumentgasung eine Entfernung von Flüchtigen aus einer Polycarbonatschmelze bis auf sehr geringe Restgehalte möglich ist. Durch geeignete Wahl der Verfahrensparameter kann für unterschiedliche Apparatekonfigurationen eine optimale Einstellung bezüglich Temperatur, Schäumungsmittel- und Lösemittelmenge und Druckverlust gefunden werden.

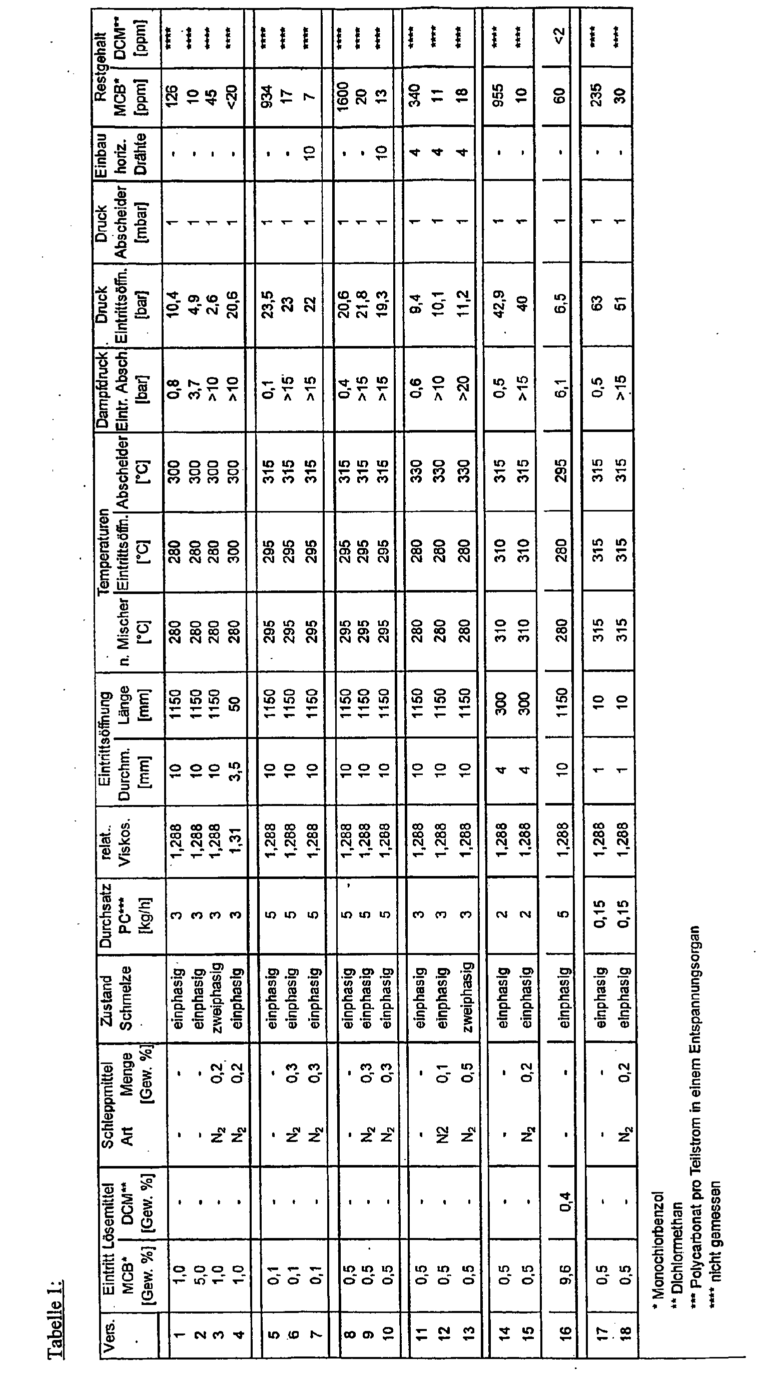

## Patentansprüche

1. Verfahren zur Isolierung von Polycarbonat, hergestellt nach dem Phasengrenzflächenverfahren, aus einer Lösung in einem organischen Lösungsmittel, umfassend die folgenden Schritte:
(a) Verdampfen des organischen Lösungsmittels bis zu einem Gehalt an Polycarbonat von 90 bis 99,95 Gew.%
(b) Gegebenenfalls Vermischen der in Schritt (a) erhaltenen Schmelze mit einem Schäumungsmittel
(c) Entgasen der aus (a) oder gegebenenfalls aus (b) erhaltenen Schmelze durch Einleiten über Eintrittsöffnungen in einen Abscheidebehälter
**dadurch gekennzeichnet, dass**
bei dem Entgasen gemäß Schritt (c) die Schmelze über die Eintrittsöffnungen in Teilströme von 0,1 bis 20 kg/h aufgeteilt wird und beim Eintritt in die Eintrittsöffnungen eine Übersättigung mit flüchtigen Bestandteilen von mindestens 1 bar sowie eine Temperatur von 250 bis 340°C aufweist, wobei der Druck in dem Abscheidebehälter 0,1 bis 20 mbar beträgt.

2. Verfahren nach Anspruch 1, **dadurch gekennzeichnet, dass** vor dem Entgasen gemäß Schritt (c) die aus (a) erhaltene Schmelze mit einem Schäumungsmittel in einem Schritt (b) vermischt wird.

3. Verfahren nach Anspruch 2, **dadurch gekennzeichnet, dass** das Schäumungsmittel beim Eintritt in die Eintrittsöffnungen gemäß Schritt (c) vollständig gelöst ist.

4. Verfahren nach einem der Ansprüche 1 bis 3, **dadurch gekennzeichnet, dass** die Verweilzeit in dem Abscheidebehälter gemäß Schritt (c) maximal 10 Minuten beträgt.

5. Verfahren nach einem der Ansprüche 1 bis 4, **dadurch gekennzeichnet, dass** in dem Abscheidebehälter im Wesentlichen horizontal angeordnete Leitelemente, insbesondere Drähte, vorgesehen sind.

6. Verfahren nach einem der Ansprüche 1 bis 5, **dadurch gekennzeichnet, dass** die Schmelze zwischen den Schritten (a) und (b) und/oder (b) und (c) erwärmt oder abgekühlt wird.

7. Verfahren nach einem der Ansprüche 1 bis 6, **dadurch gekennzeichnet, dass** die Schmelze nach dem Eintritt in die Eintrittsöffnungen erwärmt wird.

## Claims

1. Process for the isolation of polycarbonate produced by the phase interface process, from a solution in an organic solvent, comprising the following steps:
(a) evaporation of the organic solvent to obtain a content of polycarbonate of 90 to 99.95 wt.%,
(b) optionally mixing the melt obtained in step (a) with a foaming agent,
(c) degassing of the melt obtained from (a) or optionally (b) by feeding the melt through inlet openings into a separating vessel,
**characterised in that**
in the degassing according to step (c) the melt is subdivided by the inlet openings into partial streams of 0.1 to 20 kg/hr and on entry into the inlet openings has a supersaturation with volatile constituents of at least 1 bar as well as a temperature of 250° to 340°C, wherein the pressure in the separating vessel is 0.1 to 20 mbar.

2. Process according to claim 1, **characterised in that** before the degassing according to step (c) the melt obtained from (a) is mixed with a foaming agent in a step (b).

3. Process according to claim 2, **characterised in that** the foaming agent is completely dissolved on entry into the inlet openings according to step (c).

4. Process according to one of claims 1 to 3, **characterised in that** the residence time in the separating vessel according to step (c) is at most 10 minutes.

5. Process according to one of claims 1 to 4,
**characterised in that** substantially horizontally arranged guide elements, in particular wires, are provided in the separating vessel.

6. Process according to one of claims 1 to 5, **characterised in that** the melt is heated or cooled between the steps (a) and (b) and/or (b) and (c).

7. Process according to one of claims 1 to 6, **characterised in that** the melt is heated after entry into the inlet openings.

## Revendications

1. Procédé d'isolement de polycarbonate, produit selon le procédé interfacial, à partir d'une solution dans un solvant organique, comprenant les étapes suivantes:
(a) évaporation du solvant organique jusqu'à une teneur en polycarbonate comprise entre 90 et 99,95 % en poids,
(b) le cas échéant, mélangeage de la masse fondue obtenue dans l'étape (a) avec un agent moussant,
(c) dégazage de la masse fondue obtenue dans l'étape
(a) et le cas échéant dans l'étape (b) par introduction par des orifices d'admission dans un récipient séparateur,
**caractérisé en ce que**
lors du dégazage selon l'étape (c), la masse fondue est divisée par les orifices d'entrée en flux partiels de 0,1 à 20 kg/h et présente, lors de l'introduction dans les orifices d'admission, une sursaturation en composants volatiles d'au moins 1 bar ainsi qu'une température comprise entre 250 et 340 °C, la pression dans le récipient séparateur étant comprise entre 0,1 et 20 mbar.

2. Procédé selon la revendication 1, **caractérisé en ce qu'**avant le dégazage selon l'étape (c), la masse fondue obtenue lors de l'étape (a) est mélangée avec un agent moussant dans une étape (b).

3. Procédé selon la revendication 2, **caractérisé en ce que** l'agent moussant est entièrement dissous lors de l'entrée dans les orifices d'admission selon l'étape (c).

4. Procédé selon une des revendications 1 à 3, **caractérisé en ce que** le temps de séjour dans le récipient séparateur selon l'étape (c) atteint 10 minutes au maximum.

5. Procédé selon une des revendications 1 à 4, **caractérisé en ce que** des éléments conducteurs aménagés essentiellement de façon horizontale, en particulier des fils, sont prévus dans le récipient séparateur.

6. Procédé selon une des revendications 1 à 5 **caractérisé en ce que** la masse fondue est chauffée ou refroidie entre les étapes (a) et (b) et/ou (b) et (c).

7. Procédé selon une des revendications 1 à 6 **caractérisé en ce que** la masse fondue est chauffée après l'entrée dans les orifices d'admission.
